# EUROPÄISCHE PATENTSCHRIFT

(11) **EP 0 569 955 B1**
(45) Veröffentlichungstag und Bekanntmachung des Hinweises auf die Patenterteilung: **16.09.1998**
(21) Anmeldenummer: 93107691.3
(22) Anmeldetag: 11.05.1993
(51) Int. Cl.: B32B 27/12, B60J 7/08

(54) **Textiler Fahrzeugverdeckstoff aus Polyolefin-oder Polyesterfasern, vorwiegend mit zusätzlichen polymerschichten**
Vehicle folding top made of textile of polyolefin or polyester fibres, with additional polymeric layers
Capote de véhicule en textile de fibres de polyester ou polyoléfine, avec des couches additionnelles en matière polymérique

(30) Priorität: 12.05.1992 DE 9206366 U; 12.05.1992 DE 9206365 U; 24.12.1992 DE 9217708 U
(43) Veröffentlichungstag der Anmeldung: 18.11.1993
(73) Patentinhaber: Kinkel, Werner-Helmut, D-96049 Bamberg (DE)
(72) Erfinder:

(56) Entgegenhaltungen:
- EP-A- 0 284 931
- EP-A- 0 372 374
- EP-A- 0 377 813
- US-A- 4 486 492
- US-A- 5 071 699

## Beschreibung

Die Erfindung bezieht sich auf einen textilen Verdeckstoff für faltbare Fahrzeugverdecke. Solche Verdeckstoffe sind seit Jahren bekannt und werden aus einer Mischung aus Polyacrylnitrilfasern in Schußrichtung und Polyesterfasern in Kette dargestellt, seit kurzem auch als Polyacrylnitril in Kette und Schuß und einer Dichtschicht aus Polychloropren-Synthesekautschuk, sowie einer mit der Dichtschicht verbundenen Unterware aus Baumwolle, Polyamid oder Polyesterfasern. Polyacrylnitril in den bekannten angebotenen Fasertypen hat gegenüber Polyester, insbesondere bei feuchter Hitze, den Vorteil des geringeren Festigkeitsabbaus im Langzeittest. Polyester in den bisher eingesetzten Fasertypen als z.B. zwei- oder dreifach verzwirntes oder Endlosfilamentgarn wiederum hat bessere Dehnungseigenschaften und Abriebwerte. Beide eingesetzte Fasermaterialien haben wegen ihres durch das Klima beeinflußten Festigkeitsabbaus aber auch nur eine begrenzte Haltbarkeit, die nicht dem der Karosserie entspricht. Weiter ist, insbesondere auch wegen der vorwiegend im Einsatz befindlichen unterschiedlichen Polymerwerkstoffe in der Oberware, bei der Wetterschutzausrüstung der Dichtungsschicht wie bei der Unterware ein hoher chemischer Ausrüstungsaufwand gegeben.

Die nahezu unlösbar verbundenen aus mehreren Polymerbereichen stammenden Werkstoffe stehen weiter einer wirtschaftlichen Wiederverwertbarkeit entgegen. Nicht mehr verwendbare Verdecke werden daher deponiert oder mit hohem Umweltrisiko verbrannt, was durch die geschilderte bestehende Nichtverwertbarkeit und laufend steigenden Bedarf, eine erhebliche Umweltbelastung des Wassers (Deponie) oder der Luft (Verbrennung) darstellt.

Ein besonderes Problem bei der Verwendung dieser Verdeckstoffe ist aber auch die Isolierung, vorwiegend gegenüber Schall aber auch Temperatur, welche bisher weitgehend bei Einsatz von aufwendigen Konstruktionen mit sogenannten Innenspannhimmeln durch dazwischen eingelegte Zuschnitteile - vorwiegend aus schwerem Gummihaar - erfolgte. Ohne Innenspannhimmel gab es gewöhnlich keinerlei Isolierungen.

Aufgabe dieser Erfindung war es daher, nachdem z.B. die gleichmäßige Anfärbbarkeit von Polyacrylnitril nur in großen Chargen befriedigend darstellbar ist und somit hohe Mindestmengen bedingt, wie auch der Werkstoff in der Herstellung (wasserbelastend) nicht so umweltfreundlich, wie z.B. Polyester und Polypropylen, ist, einen Verdeckoberstoff aus Fasern herzustellen, welcher von der Faser her schon umweltfreundlich ist, die benötigten Festigkeiten für die Dehnung, den Abrieb und die Klimafestigkeit für den Kett- wie für den Schußbereich in einem Polymerbereich ermöglicht und weiter eine polymereinheitliche Beschichtung, bei Ausnutzung aller in Anspruch genommenen Vorteile, überhaupt darstellen läßt. Hierbei galt es die Fasereigenschaften, insbesondere was den Festigkeitsabbau betrifft, bei möglichst verbesserten Dehnungswerten, Ausrüstungseigenschaften, Reinigungsfähigkeiten unter Dauerbelastung nicht schlechter hervorzubringen als das bisher eingesetzte Polyacryl-Polyestergewebe und dies eben bei weitestgehender Polymereinheitlichkeit des Gesamtaufbaus.

Weiter galt es, eine Konstruktion zu finden, die durch den mehrschichtigen, verbundenen und vor allem leichten Aufbau diesen isolierenden Anforderungen entgegenkommt. Es ging auch darum, den Verdeckstoff durch entsprechende Verstärkungsstoffe gegen mechanische Einwirkung, z.B. Verdehnung, zu schützen. Diese Belastungen werden insbesondere durch die Spannbügel und durch den permanenten Gebrauch ausgeübt, können aber auch durch Zerstörungswut von außen einwirken.

Diese Aufgaben konnten gelöst und je nach Wunsch und Bedarf in einem oder mehreren Schritten vollzogen werden, vorwiegend z.B. durch den erstmaligen Einsatz eines Polypropylengewebes für diesen Bereich, wobei sich in der bevorzugten polymeridentischen Verbundversion dabei die Beschichtung des Gewebes mit einer extrudierten oder kalandrierten Folie auf Polyolefinbasis als besonders vorteilhaft erwiesen hat. Hierbei wurde die Polyolefinfolie mit einer Temperatur, die oberhalb des Erweichungspunktes dieser Folie liegt, im termoplastischen Zustand über Kalanderwalzen, somit über Druck und Temperatur, mit dem Polypropylengewebe verbunden, so daß eine sehr dauerhafte Verbindung zwischen Gewebe und Beschichtung entstand. Dieser Kaschierprozess kann dabei sowohl für ein zweischichtiges Produkt als auch für ein Trilaminat eingesetzt werden. Bei einem Zweischichtmaterial ist die Dichtungsschicht noch rückseitig zu lackieren. Bei Polyester half die Entwicklung und der Einsatz von Hochmodultypen oder sog. dimensionsstabilen Fasertypen, weiter die Verwendung von z.B. LCP-Typen auf Basis Copolyester den Ansprüchen an Dehnung und Festigkeitsabbau zu entsprechen. Bei beiden Polymerbereichen kamen dabei, auch durch den Einsatz vorwiegend von Multifilamentfäden in der Kette ggfs. auch im Schuß, weiter Verbesserungen in bezug auf die Dehnungswerte zustande. Hochmolekulare UV-stabile PP Fasertypen zeigten weiter besonders in bezug auf Schmutzabweisung, Reinigungsfähigkeit und Beständigkeiten gegen Feuchtigkeit hervorragende Ergebnisse. Eine denkbare Wiederverwertung durch Einschmelzung oder auch nur das Verbrennen eines solchen neuen in der bevorzugten Version dann polymeridentischen Verdeckstoffes stellt eine wesentliche Verbesserung dar, da hierbei z.B. im Gegensatz zu den bekannten Lösungen beim Verbrennen keine toxischen Schadstoffe mehr entstehen. Die notwendige Dichtschicht kann sowohl als gestrichene kompakte Schicht als auch als kaschierte evtl. duplierte Folie oder auch als eine geschlossenzellige Schaumschicht oder einer Mischung daraus vorliegen, wobei sich hierfür termoplastische Elastomere angepaßt an den jeweiligen Fasertyp, bei den bevorzugten Lösungen, eignen. Als besonders geeignet für den Olefinbereich hat sich ein thermoplastisches Elastomer, basierend auf einem Olefin mit vollvernetztem Elastomeren erwiesen, welches in Bezug auf Festigkeitsabbau und Wärmealterung sogar bessere Werte ergibt als die bisher verwendeten Polychloroprenkautschuktypen.

Ein besonderer Vorteil der Polymereinheitlichkeit von Kette und Schuß bei der textilen Ober- und Unterware liegt auch darin, daß die benötigten Ausrüstungs-Chemikalien, die z.B. zusätzlich für besonders kritische Gebiete im Süden der Erdhalbkugel zur verbesserten Darstellung der UV-Stabilität, aber auch der Chemikalienbeständigkeit (z.B. Reinigungsmittel - kontaminierter Regen) und der Schmutzabweisung, leichter auf einen Polymerwerkstoff abzustimmen sind als auf eine Polymermischung bei den Fasern. Hier konnte z.B. auch durch die Zugabe von "HALS" - Produkten und Benzotriazolen zum Imprägnierungsmittel (z.B. Oleophobol) der oxidative Polymerkettenabbau durch UV-Strahlung weitgehend verhindert werden, wodurch sich auch der Langzeit-Festigkeitsabbau des Polypropylen-Obergewebes verringern ließ.

Eine Reihe dieser benötigten Eigenschaften, wie z.B. höhere Schmutzabweisung, lassen sich oder sind ggfs. bereits in den Polymerfasern dabei integriert oder sind wie bei PP bereits durch den Polymerwerkstoff gegeben, so daß der Ausrüstungsbedarf weiter begrenzt werden kann.

Ein zusätzlicher Vorteil liegt auch bei der Beschichtung mit thermoplastischen Elastomeren als Dichtschicht, wie auch Mischungen daraus, darin, daß diese Dichtungsschichten in bezug auf die Haftung ebenfalls optimaler auf einen einzigen Polymerbereich in Ober- und Unterware abgestimmt werden können, womit z.B. auch die Verschweißbarkeit verbessert werden kann. Dies gilt ebenfalls für eventuelle transparente Oberflächenbeschichtungen oder Ausrüstungen.

Die Isolierungsaufgabe konnte gelöst werden durch den Einsatz von z.B. Faservliesen, Distanzgeweben oder Distanzgewirken, offenporigen oder geschlossenporigen Schaumstoffen, Kunststoffhohlpartikel oder -kugeln, aber auch isolierenden Folien, z.B. sogenannten Noppenfolien und dergleichen oder einer Mischung daraus, wobei vorwiegend die Dicke und hierbei jeweils die eingeschlossenen Luftanteile diesen besonderen Wärme- und Schallschutz darstellen.

Diese Materialien können, sofern sie zur Fahrzeuginnensichtseite mit einer Dekoroptik ausgestattet sind und dabei auch die benötigten Scheuerwerte darstellen, allein als Rückseite der Beschichtung des Verdeckstoffes eingesetzt werden. Dies gilt insbesondere dann, wenn die Verdeckstoffe im Fahrzeug so eingesetzt werden, daß in jedem Fall noch ein zusätzlicher Innenspannhimmel verwendet wird. Bei Anwendung auch als Innenhimmel ist jedoch eine weitere Schicht als Unterware, wie z.B. Gewebe, Gestricke, Gewirke oder eben Vliese, vorgesehen, um die hier gewünschten Dekoroptiken und technischen Eigenschaften darstellen zu können.

Zur Erhöhung der Festigkeit der Quer- und Längsstabilität, wie auch zur Abwehr gegen Vandalismus, kann das Material innerhalb der wasserdichtenden Schicht und/oder an ihren Oberflächen durch Verstärkungsmaterialien, wie z.B. Gittergeweben oder Gelegen aus polymeren, auch hochfesten Fasern und/oder anorganischen, z.B. Glas oder Metalltüllen, welche aufgrund ihres extrem anders liegenden Schmelzbereiches leicht getrennt werden können , vorwiegend aber Faserwerkstoffen, verstärkt werden, um z.B. die unerwünschte Ballonwirkung zu vermindern und trägt somit zu ihrer Dauerfunktionsfähigkeit bei.

Neben oder alternativ zu den bekannten Verschweiß-, Klebe- und Nähtechniken ist ebenfalls, insbesondere auch bei dickem Aufbau des Verbundes durch einschäumen der Zuschnitte oder z.B. der eingearbeiteten Fenster in sogenannte H-, T-Profile oder dergleichen, aus z.B. PU, TPE, TPO, möglich. Nähte und Übergänge können hierbei jedoch auch durch Wegnahme der Isolierungsschicht an den Übergängen von der Dicke her reduziert werden.

## Patentansprüche

1. Textiler Verdeckstoff, dessen Kett- und Schußfäden der Oberware im wesentlichen aus Polyolefinfasern, vorwiegend aus Polypropylen, alternativ aus Polyester oder Copolyester bestehen, und es sich dabei um einen dann, zumindest zwei- oder mehrschichtigen Aufbau handelt, wobei die wasserdichtende Schicht aus einer Kompaktschicht oder aus einer Folie oder aus einem geschlossenzelligen Schaum oder aus einer Kombination dieser Möglichkeiten besteht, dadurch gekennzeichnet, daß die wasserdichtende Schicht aus thermoplastischen Elastomeren besteht.

2. Verdeckstoff nach Anspruch 1, dadurch gekennzeichnet, daß zur Erhöhung der Schall- und Wärmeisolierung die Unterseite der wasserdichtenden Schicht zusätzlich eine festverbundene Isolierung aus lufteinschließenden, Volumen darstellenden Flächenstrukturen z.B. Faservlies, offenporigen oder geschlossenporigen Schäumen oder Kunststoffpartikeln oder -kugeln, Distanzgeweben, Distanzgewirken, Noppenfolien und dergleichen, erhält, oder eine Mischung verschiedener dieser Werkstoffe, vorwiegend auf Basis Polyester oder Polyolefinen, aber auch aus anderen Zusammensetzungen oder Mischungen, welche, je nach verwendetem Material, gleichzeitig die Dekoroberfläche der Innenseite des Verdecks darstellt, oder aber noch zusätzlich durch ein weiteres Oberflächendekormaterial abgedeckt wird.

3. Verdeckstoff nach Anspruch 1 oder 2, dadurch gekennzeichnet, daß Zuschnitte dieses Verdeckstoffes und/oder die Fensterbereiche darin, durch Verschweißtechnikern, wie z.B. Ultraschall, Heizkeil, Heißluft oder Hochfrequenz miteinander verbunden sind und/oder als Blindprägung Sollknickstellen erhalten haben, wobei, ggfs. zur Verstärkung und Abdichtung der Verbindungsnähte, auch ganz oder in Teilbereichen zusätzlich genäht und/oder verklebt wurde.

4. Verdeckstoff nach einem oder mehreren der Ansprüche 1 bis 3, dadurch gekennzeichnet, daß alle Nähte der Textilverdecke oder nur bestimmte Bereiche davon, wie z.B.die Übergänge, zu eingearbeiteten Fenstern durch Einschäumung in eine sogenanntes H-, T-Profil oder dergleichen, aus z.B. PU, TPE, TPO verbunden wurden.

5. Cabrio-Verdecke, herstellbar aus einem Verdeckstoff nach einem oder mehreren Ansprüchen 1 - 4.

## Claims

1. Textile car top fabric in which the warp and weft threads of the top web essentially consist of polyolefin fibres, these being predominantly made of polypropylene or, alternatively, polyester or copolyester, and which constitutes a multi-layer, and at the least two-layer, structure, with the waterproofing layer consisting of a compact layer or a film or a closed-cell foam or a combination of these possibilities, said structure being characterized in that the waterproof layer consists of thermoplastic elastomers.

2. A car top fabric according to claim 1 characterized in that, in order to increase the sound and heat insulation, the bottom of the waterproofing layer is additionally provided with a permanently bonded insulation consisting of air-trapping, volume-forming surface structures, e.g. spunbonded tissue, open-pored or closed-pored foams or synthetic particles or globules, space-woven fabrics, space-knit fabrics, knopped films and the like, or a mixture of several of these materials, predominantly polyester- or polyolefin-based, but also in other compositions or mixtures, that, depending on which material is used, constitutes the decoration surface of the car top's inside, or that is additionally covered by a further surface decoration material.

3. Car top fabric according to claims 1 or 2 characterized in that cut-outs of this car top fabric and/or the window areas therein are connected by means of welding techniques such as ultrasonic, hot-wedge, hot-air or high-frequency welding and/or have been provided as blank stampings with predetermined break points, and, if required for the strengthening and impermeability of the connection seams, with additional sewing and/or bonding over the entire area or parts thereof.

4. A car top fabric according to any one, or several, of claims 1 to 3 characterized in that all seams of the textile car top fabrics or only certain areas thereof, such as the transition areas, were connected to inserted windows by being foam-injected into a so-called H- or T-profile or the like consisting of PU, TPE or TPO, for instance.

5. Car tops for convertibles that can be manufactured with a car top fabric according to any one, or several of, claims 1 to 4.

## Revendications

1. Tissu de capote textile, dont les fils de chaîne et les fils de trame du trame du tissu supérieur sont essentiellement constitués par des fibres de polyoléfine, en majorité de polypropylène, en alternative de polyester ou de Copolyester, et il s'agit alors ici d'une structure à au moins deux ou plusieurs couches; la couche imperméable à l'eau étant constituée par une couche compacte ou par une feuille ou par une mousse à cellules fermées ou par une combinaison de ces possibilités, caractérisé en cc que la couche imperméable à l'eau est en élastomères thermoplastiques.

2. Tissu de capote selon la revendication 1, caractérisé en cc que pour augmenter l'isolation au bruits et à la chaleur, la face inférieure de la couche imperméable à l'eau reçoit additionnellement une isolation solidaire en structures de surface à inclusion d'air constituant un volume, par exemple une nappe fibreuse, des mousses à pores ouverts ou fermés, ou des particules ou billes de matière plastique, des tissus d'espacement, des tricots d'espacement, des feuilles à noppes et similaires, ou un mélange de plusieurs de ccs matériaux, en majorité base de polyester ou de polyoléfine, mais aussi en d'autres compositions ou mélanges, lesquels, selon le matériau utilisé constituent simultanément la surface décorative de la face intérieure de la capote, ou bien encore sont additionnellement recouverts par un autre matériau destiné au décor de surface.

3. Tissu de capote selon l'une ou l'autre des revendications 1 et 2, caractérisé en cc que des découpes de cc tissu de capote et/ou les zones de fenêtres dans celui-ci, sont reliées les unes autres par des techniques de soudage, telles que par exemple par ultrasons, par coin chauffant, par air chaud ou par haute fréquence et/ou reçu par gaufrage à froid des points d'inflexion de consigne, et le cas échéant, pour renforcer ou étanchéitier des coutures de liaison, on les a additionnellement cousues et/ou collées, entièrement ou dans des régions partielles.

4. Tissu de capote selon l'une ou plusieurs des revendications 1 à 3, caractérisé en ce que toutes les coutures des capotes en texile ou seulement des régions déterminées de celles-ci, comme par exemple les transitions, ont été reliées pour formes des fenêtres incorporées, par exemple par moussage en un profil dit en H, en T ou similaire, par exemple en PU, TPE, TPO.

5. Capotes de cabriolets, susceptibles d'être fabriquées en un tissu pour capotes selon l'une ou plusieurs des revendications 1 à 4.
